# EUROPEAN PATENT APPLICATION

(11) **EP 4 484 470 A1**
(43) Date of publication of application: **01.01.2025**
(21) Application number: 23760372.5
(22) Date of filing: 22.02.2023
(51) Int. Cl.: C08H 8/00, C08B 1/00, C08B 37/00, C08J 3/12, C08L 1/02, C08L 97/00, C08L 101/00

(54) **METHOD FOR PREPARING SCRATCH-RESISTANT BIO-ADDITIVE FOR ADDITION TO PLASTICS, AND SCRATCH-RESISTANT BIO-ADDITIVE FOR ADDITION TO PLASTICS PREPARED THEREBY**

(30) Priority: 24.02.2022 KR 20220024553
(71) Applicant: Lignum Inc., Daejeon 34134 (KR)
(72) Inventor: LEE, Sang-Hyun, Daejeon 34049 (KR)
(74) Representative: Epping - Hermann - Fischer
(86) International application number: PCT/KR2023/002512
(87) International publication number: WO 2023/163498

(57) **Abstract**

The present disclosure relates to a method for preparing a scratch-resistant bio-additive for plastics and a scratch-resistant additive for plastics prepared thereby and, more specifically, to a method for preparing a scratch-resistant bio-additive for plastics, which is oleophilic from hydrophilic lignocellulosic biomass, and to a scratch-resistant bio-additive for plastics prepared thereby.

## Description

### Technical Field

The present disclosure relates to a method for preparing a scratch-resistant bio-additive for plastics and a scratch-resistant bio-additive for plastics prepared thereby. More specifically, the present disclosure relates to a method for preparing a scratch-resistant bio-additive for plastics and a scratch-resistant bio-additive for plastics prepared thereby, wherein the bio-additive exhibits improved scratch resistance and thus can replace conventional high-density inorganic fillers.

### Background Art

Recently, due to the implementation of fuel efficiency and emission regulations, the demand for lightweight vehicles has increased. To address this, many vehicle components are being manufactured from plastic.

For example, plastic car door modules consist of outer and inner panels, door trims, etc. Given the high frequency of passenger use, the aesthetic and tactile quality of the plastic surface design is important, as is the mechanical performance of the components.

Especially with the recent trend towards luxury vehicles, the aesthetic appeal of the vehicle surface has become a crucial factor for consumers. In this context, preventing surface discoloration attributed to scratches is essential for maintaining the vehicle's aesthetic appeal.

Polypropylene (PP) is representative of the commonly used plastic materials for vehicle interiors and enjoys the advantages of low density (approximately 0.9), high chemical resistance, and excellent moldability. Recently, products that enhance stiffness and scratch hardness by adding inorganic fillers like talc to polypropylene have been introduced.

However, talc has low bonding strength with the polymer matrix in the plastic and thus is prone to separation upon surface deformation and damage. The white talc particles thus exposed increase scratch visibility due to light reflection. To address this issue, additives such as rubber, silicone compounds, fluorine resins, and amide-based additives have been developed to improve scratch resistance.

Nevertheless, using rubber to improve scratch resistance has limitations in surface texture, and silicone compounds can hinder processing convenience and compatibility with polypropylene. These issues lead to dispersion problems during compounding and surface property degradation due to additive migration, forming sticky films on the plastic surface over time. Additionally, most of these additives are petroleum-based, and with the growing environmental concerns due to global warming, there is an urgent need to replace them with eco-friendly and bio-based materials to achieve carbon neutrality and reduce environmental pollution from excessive plastic use.

Regarding conventional technologies for plastic additives, reference may be made to Korean Patent No. 10-1889744, which describes a technology for producing a lignin-cellulose composite material by mechanically grinding a lignin extract from the pulp process with the pulp, preparing nanocellulose modified with a silane compound, mixing the lignin extract, pulp, and nanocellulose to give a lignin-nanocellulose composite, and mixing the composite with maleic anhydride-grafted polypropylene. However, the product also contains expensive nanocellulose and involves a very complex process, limiting its application as a material for general-purpose plastic manufacturing.

Therefore, there is an increasing need to develop a scratch-resistant bio-additive for plastics that exhibits scratch resistance, has excellent oleophilic and hydrophobic properties, and improves dispersion characteristics when used as a plastic additive, replacing petroleum-based materials with environmentally friendly bio-materials.

### Disclosure

### Technical Problem

To address the aforementioned issues, the present disclosure aims to provide a novel method for preparing a scratch-resistant bio-additive for plastics, wherein non-edible lignocellulosic biomass is used as a raw material, whereby the bio-additive, enhances scratch resistance when used in plastics and possesses excellent oleophilic and hydrophobic properties, improving dispersion characteristics and compatibility during plastic manufacturing, and ensuring a high bonding strength with the polymer matrix.

Also, the present disclosure is to provide a scratch-resistant bio-additive for plastics, prepared by the method, which improves scratch resistance, a plastic composition containing same, and a scratch-resistant plastic product including the plastic composition.

### Technical Solution

To achieve the goals, the present disclosure provides a method for preparing a scratch-resistant bio-additive for plastics, the method including the steps of: (a) adding an acid to lignocellulosic biomass to hydrolyze at least a portion of hemicellulose in the lignocellulosic biomass and simultaneously to convert at least a portion of cellulose into microfibrillated cellulose (MFC), thus obtaining a lignin-microfibrillated cellulose (MFC) composite; (b) selectively hydrolyzing at least a portion of an amorphous region of the microfibrillated cellulose (MFC) in the lignin-microfibrillated cellulose (MFC) composite obtained from step (a) to increase crystallinity of the microfibrillated cellulose (MFC); (c) adding a base to the lignin-microfibrillated cellulose (MFC) composite with increased crystallinity obtained from step (b) to neutralize the residual acidic components, and then removing a water-soluble substance to obtain solid particles; and (d) grinding the solid particles obtained from step (c).

The present disclosure also provides a method for preparing a scratch-resistant bio-additive for plastics, the method including the steps of: (a) adding an acid to lignocellulosic biomass to hydrolyze at least a portion of hemicellulose in the lignocellulosic biomass and simultaneously to convert at least a portion of cellulose into microfibrillated cellulose (MFC) and selectively hydrolyze at least a portion of an amorphous region of the microfibrillated cellulose (MFC) to increase crystallinity of the microfibrillated cellulose (MFC), thereby generating a lignin-microfibrillated cellulose (MFC) composite; (b) adding a base to the lignin-microfibrillated cellulose (MFC) composite obtained from step (a) to neutralize a residual acidic component, and then removing a water-soluble substance to obtain solid particles; and (c) grinding the solid particles obtained from step (b).

In an embodiment, the acid in step (a) may be an organic acid of 1 to 20 carbon atoms; or an inorganic acid selected from sulfuric acid, hydrochloric acid, phosphoric acid, nitric acid, and a mixture thereof; a mixture of the organic and inorganic acids; or a mixture of the organic acid and the mixture of inorganic acids.

In an embodiment, step (a) may be performed by subjecting lignocellulosic biomass in the presence of an acid to i) heat and/or pressure treatment, ii) steam explosion, or iii) a process combining the high-temperature and high-pressure treatment and steam explosion.

In an embodiment, the step of selectively hydrolyzing at least a portion of an amorphous region of the microfibrillated cellulose (MFC) in the lignin-microfibrillated cellulose (MFC) composite to obtain a lignin-microfibrillated cellulose (MFC) composite with increased crystallinity of the microfibrillated cellulose (MFC) may be carried out under higher-temperature and/or higher-pressure conditions than the preceding step where an acid is added to lignocellulosic biomass to hydrolyze at least a portion of the hemicellulose in the lignocellulosic biomass and simultaneously convert at least a portion of the cellulose into microfibrillated cellulose (MFC), thus obtaining a lignin-microfibrillated cellulose (MFC).

In an embodiment, the acid in step (a) may be hydrochloric acid, sulfuric acid, or nitric acid, used either alone or in combination, with an acid concentration ranging from 0.5 to 70 wt%.

In one embodiment, the base used in the step of neutralizing the residual acidic components may be selected from sodium hydroxide (NaOH), potassium hydroxide (KOH), calcium hydroxide (Ca(OH)₂), ammonia (NH₃), lithium hydroxide (LiOH), calcium carbonate (CaCO₃), potassium carbonate (K₂CO₃), sodium carbonate (Na₂CO₃), potassium bicarbonate (KHCO₃), magnesium hydroxide (Mg(OH)₂), calcium oxide (CaO), magnesium oxide (MgO), sodium bicarbonate (NaHCO₃), and a combination thereof.

In an embodiment, the solid particles obtained through the step of obtaining solid particles may have a hemicellulose content of 5 wt% or less, preferably 3 wt% or less, and more preferably 2 wt% or less, based on the total weight of the lignin, cellulose, and hemicellulose components.

In an embodiment, the solid particles obtained through the step of obtaining solid particles may contain lignin-derived components in an amount of 1 wt% to 99 wt%, and cellulose-derived components in an amount of 1 wt% to 99 wt%, based on the total weight of the lignin, cellulose, and hemicellulose components.

In an embodiment, the microfibrillated cellulose (MFC) in the ground solid particles obtained from the grinding step may has a length of 50 nm to 100 µm, preferably 100 nm to 50 µm, and more preferably from 300 nm to 20 µm.

The present disclosure also provides a scratch-resistant bio-additive for plastics, prepared by the method for preparing a scratch-resistant bio-additive for plastics according to the present disclosure.

Additionally, the present disclosure provides a scratch-resistant bio-additive for plastics, wherein the bio-additive includes a lignin-microfibrillated cellulose (MFC) composite with the microfibrillated cellulose converted from at least a portion of cellulose by acid treatment and neutralization of lignocellulosic biomass and contains a lignin-derived component in an amount of 1 to 99 wt%, a cellulose-derived component in an amount of 1 to 99 wt%, and hemicellulose in an amount of 5 wt% or less, based on the total weight of the components derived from lignin, cellulose, and hemicellulose, with the microfibrillated cellulose (MFC) in the lignin-microfibrillated cellulose (MFC) ranging in length from 50 nm to 100 µm.

The present disclosure also provides a plastic composition including the scratch-resistant bio-additive for plastics and preferably including the scratch-resistant bio-additive for plastics in an amount of 0.1 to 60 wt%, based on the total weight thereof.

Furthermore, the present disclosure provides a scratch-resistant product including the plastic composition.

### Advantageous Effects

The method for preparing a scratch-resistant bio-additive for plastics according to the present disclosure can prepare the bio-additive at high yield in a simple process without high production cost from inexpensive, non-edible lignocellulosic biomass through chemical treatment processes according to specific conditions, wherein the lignocellulose is functionalized, whereby the scratch-resistant bio-additive possesses excellent oleophilic and hydrophobic properties and enhanced dispersion characteristics, allowing the plastics to exhibit scratch resistance.

In addition, with the effect of improving scratch resistance upon addition to plastics, the scratch-resistant bio-additive for plastics according to the present disclosure can be applied to the products requiring scratch resistance, such as automotive materials, construction materials, and packaging materials. Possessing a function as a filler substitutable for talc in addition to the scratch resistance effect, the bio-additive allows for the lightweighting of plastics by substituting high-density talc therewith.

Moreover, as a plant-derived material, the scratch-resistant bio-additive for plastics obtained from lignocellulosic biomass according to the present disclosure offers significant environmental advantages compared to petroleum-based materials.

### Description of Drawings

FIG. 1 shows views of (a) the hierarchical structure of biomass-derived cellulose and (b) the structure of microfibrillated cellulose, including crystalline and amorphous domains.
FIG. 2 shows scanning electron microscope images of the scratch-resistant additive before grinding, according to Preparation Example 1.
FIG. 3 shows scanning electron microscope images of the scratch-resistant additive after grinding, according to Preparation Example 1.
FIG. 4 shows specimen images illustrating scratch resistance evaluation results according to Comparative Examples 1 to 2 and Example 1 of the present disclosure.
FIG. 5 is a particle size distribution plot of the scratch-resistant additive after grinding, according to Preparation Example 1.

### Mode for Invention

Throughout the specification, when a part is described as "comprising" a component, it implies that other components can be included unless specifically stated otherwise.

Below, a detailed description will be given of the preparation method according to the present disclosure.

The method for preparing a scratch-resistant bio-additive for plastics according to the present disclosure includes the steps of: (a) adding an acid to lignocellulosic biomass to hydrolyze at least a portion of hemicellulose in the lignocellulosic biomass and simultaneously to convert at least a portion of cellulose into microfibrillated cellulose (MFC), thus obtaining a lignin-microfibrillated cellulose (MFC) composite; (b) selectively hydrolyzing at least a portion of an amorphous region of the microfibrillated cellulose (MFC) in the lignin-microfibrillated cellulose (MFC) composite obtained from step (a) to increase crystallinity of the microfibrillated cellulose (MFC); (c) adding a base to the lignin-microfibrillated cellulose (MFC) composite with increased crystallinity obtained from step (b) to neutralize the residual acidic components, and then removing a water-soluble substance to obtain solid particles; and (d) grinding the solid particles obtained from step (c).

In the first step, step (a) involves adding an acid to raw lignocellulosic biomass to hydrolyze at least a portion of the hemicellulose in the lignocellulosic biomass and simultaneously to convert at least a portion of the cellulose into microfibrillated cellulose (MFC), thereby obtaining a lignin-microfibrillated cellulose (MFC) composite.

The lignocellulosic biomass used in step (a) according to the present disclosure contains lignin and at least one of cellulose and hemicellulose and preferably all lignin, cellulose, and hemicellulose. Such lignocellulosic biomass may be derived from various sources including herbaceous plants, woody plants such as needleleaf trees and broadleaf trees (typical woods), and straw, corn stalks, palm fruit shells, and sugarcane.

In step (a) of the present disclosure, the addition of an acid breaks down the robust crystallization structure between lignin and cellulose in the biomass, hydrolyzes at least a portion of the hemicellulose, and converts at least a portion of the cellulose fibers, preferably at least 10%, more preferably at least 20%, even more preferably at least 30%, and even more preferably at least 40%, even more preferably at least 50%, even more preferably at least 60%, even more preferably at least 70%, even more preferably at least 80%, even more preferably at least 90%, and most preferably at least 95% of the cellulose component in the biomass into microfibrillated cellulose (MFC). Additionally, the acid treatment forms a polymeric form of lignin-microfibrillated cellulose (MFC) composite where lignin is bonded to at least a portion of the microfibrillated cellulose (MFC).

That is, the microfibrillated cellulose (MFC), which is a major component in the scratch-resistant bio-additive, in the lignin-microfibrillated cellulose (MFC) composite obtained by acid treatment exhibits a lignin resistance effect while the lignin hydrophobized by the acid treatment can uniformly disperse the microfibrillated cellulose (MFC) in plastics, enhancing the function as a scratch-resistant plastic additive. Thus, the present disclosure provides the advantage of offering an eco-friendly and economical plastic additive derived from low-cost lignocellulosic biomass.

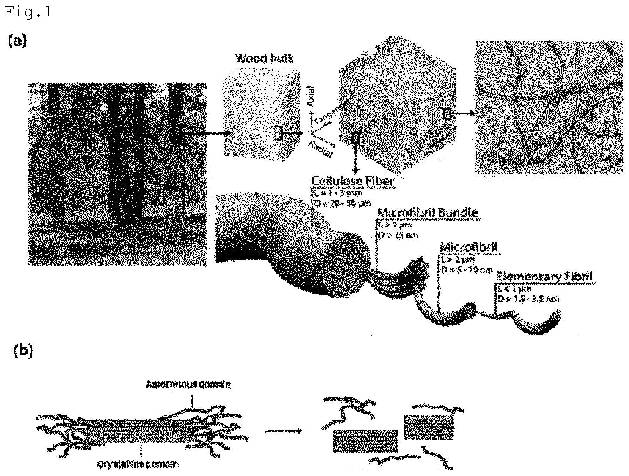

Here, the cellulose included in the lignocellulosic biomass is a fibrous material made up of linear chains connected by β-glycosidic linkage of the D-glucose unit. Referring to FIG. 1(a), which illustrates the hierarchical structure of biomass-derived cellulose, a cellulose fiber consists of microfibril bundles, which in turn consist of elementary fibrils.

Hereinafter, the term "microfibrillated cellulose" (MFC), as used herein, refers to cellulose microfibers obtained upon defibration of from cellulose fibers in lignocellulosic biomass such as wood bulk, where the fibers have a width (thickness) of 1 µm or less, preferably 100 nm or less, more preferably 50 nm or less, and even more preferably 30 nm or less. As illustrated in FIG. 1(a), the term is construed as a concept including microfibril bundles and microfibrils.

In this regard, as shown in FIG. 1(b), the microfibrillated cellulose (MFC) has a structure that includes both crystalline and amorphous domains.

Meanwhile, as the raw material in step (a), the lignocellulosic biomass can be used after undergoing a drying process and grinding. To ensure uniformity in subsequent processes, the biomass is preferably ground to a size of 20 mm or less, more preferably 10 to 0.001 mm.

In step (a), the acid, acting as a catalyst, hydrolyzes at least a portion of the hemicellulose in the lignocellulosic biomass while converting at least a portion of the cellulose into microfibrillated cellulose (MFC).

The acid used in step (a) may be an organic acid of 1 to 20 carbon atoms; an inorganic acid selected from sulfuric acid, hydrochloric acid, phosphoric acid, and nitric acid, or mixtures thereof; or a mixture of organic and inorganic acids.

As for the organic acid, it is based on carboxylic acid. Depending on the number of carboxyl acid groups, the organic acid accounts for mono-carboxylic acids, bis-carboxylic acids, triscarboxylic acids, and tetra-carboxylic acids. Available are organic acids of 1 to 20 carbon atoms and preferably of 1 to 15 carbon atoms, with more preference for acetic acid, formic acid, and propionic acid.

Preferred examples of the acid component used as the inorganic acid include any one selected from hydrochloric acid, sulfuric acid, nitric acid, and a mixture thereof. The acid may be used preferably in an amount of 0.5 to 70 wt%, based on the total weight of the aqueous solution containing the ground biomass and acid, more preferably in an amount of 0.6 to 65 wt%, and even more preferably in an amount of 0.7 to 60 wt%. In a preferred embodiment, sulfuric acid may be used in in an amount of 0.5 to 70 wt%, more preferably in an amount of 0.6 to 65 wt%, and even more preferably in an amount of 0.7 to 60 wt%, based on the total weight of the aqueous solution containing the ground biomass and acid.

Here, by way of example, when 75% (v/v) sulfuric acid is added, the final concentration of sulfuric acid may range from 0.5 wt% to 70 wt%, based on the total weight of the ground biomass and aqueous solution, and preferably from 0.6 wt% to 65 wt%. The optimal conditions for the ratio may vary depending on the type of biomass used. Similar molar ranges can be calculated if using hydrochloric acid, and appropriate amounts of strong acid can be determined when using a mixture of sulfuric acid and hydrochloric acid based on the aforementioned ranges.

Additionally, in the present disclosure, step (a) can be performed by i) heat and/or pressure treatment in the presence of an aqueous acid solution, ii) steam explosion in the presence of an aqueous acid solution, or iii) by a combination of the high-temperature and high-pressure treatment and steam explosion.

Here, for the hydrolysis process in step (a), i) the heat and/or pressure treatment involves reacting a mixture of lignocellulosic biomass and an aqueous acid solution at 80 to 250°C and preferably 90 to 150°C for 2 minutes to 2 days and preferably 5 minutes to 5 hours, under atmospheric pressure or up to 10 atmospheres, followed by depressurization and filtration of the solids, or ii) the steam explosion process involves reacting a mixture of lignocellulosic biomass and an aqueous acid solution with steam at 100 to 250°C, preferably 120 to 190°C, for 5 minutes to 5 hours, preferably 10 minutes to 1 hour, followed by rapid depressurization to complete the reaction.

The concentration of the acid added can vary depending on the type of acid and the conditions such as reaction temperature and pressure.

In step (b), at least a portion of the amorphous regions of the microfibrillated cellulose (MFC) in the lignin-microfibrillated cellulose (MFC) composite obtained from step (a) undergoes selective hydrolysis to increase the crystallinity of the microfibrillated cellulose (MFC). As illustrated in FIG. 1(b), the microfibrillated cellulose (MFC) includes both crystalline and amorphous domains. By hydrolyzing at least a portion of the amorphous regions, the fibrous structure of the microfibrillated cellulose (MFC) is disrupted, and its crystallinity is improved, resulting in enhanced scratch resistance and improved stiffness and strength when used as a bio-additive for plastics.

The partial hydrolysis reaction of the amorphous regions of the microfibrillated cellulose (MFC) in step (b) may be carried out by subjecting the reaction product obtained from step (a) to additional high-temperature and high-pressure conditions. Preferably, step (b) may be performed under higher temperature and/or pressure conditions than step (a).

Through steps (a) and (b) according to the present disclosure, changes are induced in the molecular structure of the lignin- microfibrillated cellulose (MFC) composite in the biomass. Many hydroxyl groups (-OH) and carboxyl groups (-COOH) present in the composite can be removed through dehydration and decarboxylation reactions, respectively, leading to hydrophobization. Hydrophobic solid particles with various structures and properties can be produced through changes in the weight ratio between lignin and microfibrillated cellulose (MFC) in the composite and through condensation/polymerization reactions between functional groups.

For explanation in more detail, the reaction of the lignocellulosic biomass with an acid such as hydrochloric acid or sulfuric acid under a stirring condition converts the hydrophilic cellulose in the lignocellulosic biomass into microfibrillated cellulose (MFC) and selectively hydrolyzes the amorphous portion of the microfibrillated cellulose (MFC) to improve crystallinity, while inducing dehydration reactions of hydroxyl groups (R-OH) and decarboxylation reactions of carboxyl groups (R-COOH) in the lignin/microfibrillated cellulose (MFC) molecules, thus making thee composite hydrophobic. Additionally, condensation/polymerization reactions between various functional groups present in the lignin and microfibrillated cellulose (MFC) molecules may occur, forming hydrophobic solid particles with a very complex polymer structure.

In the present disclosure, conditions of the chemical reaction with an acid (reaction time, reaction temperature, acid concentration, reaction pressure, etc.) are controlled to appropriately adjust the conditions for the formation of microfibrillated cellulose (MFC) and the partial hydrolysis of the amorphous portion of the microfibrillated cellulose (MFC), whereby the ratio of lignin-microfibrillated cellulose (MFC) in the solid particles obtained afterward can be variably controlled to produce bio-scratch additives for plastics with various properties.

Meanwhile, steps (a) and (b) may proceed sequentially over time in the same reactor, or in separate reactors where the reaction product obtained after step (a) is introduced into a separate reactor for step (b). This decision can be made comprehensively considering the reaction conditions, the size of the reactants, and economic efficiency.

Additionally, in the present disclosure, steps (a) and (b) may be performed with a time gap, where step (a) is carried out first, followed by step (b). Alternatively, steps (a) and (b) may be carried out simultaneously.

When steps (a) and (b) are carried out simultaneously, the same reaction conditions are applied to the steps (a) and (b). Accordingly, steps (a) and (b) correspond to adding an acid to lignocellulosic biomass to hydrolyze at least a portion of the hemicellulose in the lignocellulosic biomass while simultaneously converting at least a portion of the cellulose into microfibrillated cellulose (MFC) and selectively hydrolyzing at least a portion of the amorphous portion of the microfibrillated cellulose (MFC) to improve the crystallinity, thereby producing a lignin-microfibrillated cellulose (MFC) composite.

In the present disclosure, step (c) involves adding a base to the lignin-microfibrillated cellulose (MFC) composite obtained from step (b) to neutralize residual acidic components, followed by removing water-soluble substances to obtain solid particles. If the residual acidic components remain, they can adversely affect plastic manufacturing and properties, so they are removed by neutralization using a base.

The base used may be at least one selected from sodium hydroxide (NaOH), potassium hydroxide (KOH), calcium hydroxide (Ca(OH)₂), ammonia (NH₃), lithium hydroxide (LiOH), calcium carbonate (CaCO₃), potassium carbonate (K₂CO₃), sodium carbonate (Na₂CO₃), potassium bicarbonate (KHCO₃), magnesium hydroxide (Mg(OH)₂), calcium oxide (CaO), magnesium oxide (MgO), sodium bicarbonate (NaHCO₃), and a combination thereof. So long as it neutralizes the acidic component, any base may be employed regardless of types thereof.

Before neutralizing the residual acidic components, the method may further include a step of washing the modified lignin-microfibrillated cellulose (MFC) composite obtained from step (b) with water between steps (b) and (c). The acid in the aqueous solution obtained after washing can be recovered and reused.

In step (c), removing water-soluble substances from the neutralized reaction product may be achieved by dehydrating the neutralized reaction product and washing the dehydrated product with water to leave solid particles while removing water-soluble substances included in the reaction product. Herein, the term "water-soluble substance" refers to a component dissolvable in an aqueous solution and is intended to encompass residual sugar components derived from the biomass, substances generated during the acid addition process, and substances generated during the base addition process.

The removal of water-soluble substances may be carried out, for example, through a washing process using an aqueous solution. More specifically, washing the product obtained from the neutralization in step (c) with an aqueous solution can remove water-soluble salts obtained by the addition of acidic and basic components and some hydrolyzed sugars from the lignocellulosic biomass. Consequently, removing a certain amount of polysaccharides hydrolyzed by the acid component results in obtaining modified solid particles, where the lignocellulosic biomass is converted in an amount of at least 30 wt%, preferably in an amount of at least 40 wt%, more preferably in an amount of at least 50 wt%, even more preferably in an amount of at least 60 wt%, and most preferably in an amount of at least 70 wt%, based on the dry weight of the input biomass.

The solid particles obtained through step (c) may contain 5 wt% or less, preferably 3 wt% or less, more preferably 2 wt% or less of hemicellulose, based on the total content of lignin, cellulose, and hemicellulose-derived components.

That is, most of the hemicellulose present in the biomass is removed through steps (a) and (b), and the obtained solid particles mainly contain lignin and microfibrillated cellulose (MFC). These main components form a lignin-microfibrillated cellulose (MFC) composite that functions as a bio-additive for plastics.

The solid particles obtained through step (c) may contain lignin-derived components in an amount of 1 wt% to 99 wt%, preferably in an amount of 20 wt% to 80 wt%, more preferably in an amount of 30 wt% to 70 wt%, and most preferably in an amount of 40 wt% to 60 wt%, based on the total weight of lignin, cellulose, and hemicellulose-derived components.

Additionally, the solid particles obtained through step (c) may contain cellulose-derived components in an amount of 1 wt% to 99 wt%, preferably in an amount of 20 wt% to 80 wt%, more preferably in an amount of 25 wt% to 75 wt%, and most preferably in an amount of 30 wt% to 70 wt%, based on the total weight of lignin, cellulose, and hemicellulose-derived components.

In addition, the solid particles obtained through step (c) may contain lignin-derived components in an amount of 1 wt% to 99 wt% and preferably in an amount of 20 wt% to 80 wt% and cellulose-derived components in an amount of 1 wt% to 99 wt% and preferably in an amount of 20 wt% to 80 wt%, based on the total content of lignin, cellulose, and hemicellulose-derived components.

In the present disclosure, step (d) involves grinding the solid particles obtained from step (c). This step is performed to manufacture a powder form that is intended to improve dispersibility, compatibility with other additives, and ease of handling for use as the scratch-resistant additive for plastics. So long as it is known in the art, any grinding method such as ball milling, spex milling, and nano milling can be applied without limitations, and the particle size after grinding may range from 0.05 to 200 µm.

Before grinding in step (d), a step of drying the solid particles may be performed. Through the drying step, the moisture content in the solid particles can be reduced to less than 5 wt%.

Additionally, in the present disclosure, the length of the microfibrillated cellulose (MFC) in the ground solid particles obtained from step (d) may range from 50 nm to 100 µm, preferably from 100 nm to 50 µm, and more preferably from 300 nm to 20 µm.

The present disclosure provides a scratch-resistant bio-additive for plastics, prepared by the method described above.

More specifically, the present disclosure provides a scratch-resistant bio-additive for plastics, which includes the lignin-microfibrillated cellulose (MFC) composite described above.

In greater detail, the present disclosure provides a scratch-resistant bio-additive for plastics, wherein the bio-additive: includes a lignin-microfibrillated cellulose (MFC) composite in which at least a portion of cellulose is converted into microfibrillated cellulose by acid treatment of lignocellulosic biomass and subsequent neutralization; and contains lignin-derived components in an amount of 1 wt% to 99 wt%, cellulose-derived components in an amount of 1 wt% to 99 wt%, and hemicellulose in an amount of 5 wt% or less, based on the total weight of lignin-, cellulose-, and hemicellulose-derived components, with the microfibrillated cellulose (MFC) in the lignin-microfibrillated cellulose (MFC) composite ranging in length from 50 nm to 100 µm.

The composition of the scratch-resistant bio-additive for plastics according to the present disclosure is the same as described in the method for preparing a scratch-resistant bio-additive, and regarding the description thereof, reference may be made to the previously mentioned sections.

The present disclosure also provides a plastic composition including the scratch-resistant bio-additive for plastics. Preferably, the plastic composition can contain the scratch-resistant bio-additive in an amount of 0.1 to 60 wt%, based on the total weight thereof.

That is, when manufactured, a plastic composite material containing the scratch-resistant bio-additive according to the present disclosure exhibits improved scratch resistance while retaining the properties of conventional petroleum-based plastics, thereby finding very valuable commercial applications.

Conventionally, cellulose or lignin components separated from lignocellulosic biomass may cause various issues during plastic manufacturing due to their hydrophilicity or fibrous structure, leading to low versatility. However, the scratch-resistant bio-additive for plastics obtained according to the present disclosure results from acid treatment of lignocellulosic biomass to convert cellulose into microfibrillated cellulose (MFC), remove hemicellulose and hydrolysis of amorphous domains of the microfibrillated cellulose (MFC) to improve the crystallinity of the microfibrillated cellulose (MFC), whereby the additive becomes more hydrophobic, has improved compatibility with general-purpose plastics through minimization of the fibrous structure thereof, and ultimately can impart enhanced scratch-resistant surface properties to the plastic materials.

Additionally, the specific processes used in each step of the present disclosure allow for the direct use of lignocellulosic biomass as a raw material without the need to separately purify cellulose or lignin. This method enables the removal of hemicellulose and the partial hydrolysis of the amorphous portion of microfibrillated cellulose (MFC) to occur sequentially or simultaneously in a single reactor. Compared to conventional techniques, the method of the present disclosure simplifies the process and economically produces high-yield scratch-resistant bio-additives.

When used in a plastic, the scratch-resistant bio-additive for plastics according to the present disclosure may be contained in an amount of 0.1 to 60 wt%, preferably in an amount of 0.5 to 30 wt%, more preferably in an amount of 0.8 to 20 wt%, and most preferably in an amount of 2 to 15 wt%, based on the total weight of the plastic material.

So long as it requires scratch resistance, any plastic may be added and mixed with the scratch-resistant bio-additive according to the present disclosure, regardless of types of plastic. Preferably, the plastic component to which the bio-additive may be added is at least one selected from the group consisting of polypropylene (PP), polyethylene (PE), polyvinyl chloride (PVC), polystyrene (PS), polyurethane, polycarbonate, polyurea, polyimide, polyamide, polyacetal, polyester, nylon, epoxy resin, acrylic resin, acrylonitrile-butadiene-styrene (ABS), polylactic acid, polybutylene adipate terephthalate, and polybutylene succinate.

By way of example, 0.1 to 30 wt% of the bio-additive obtained according to the present disclosure may be mixed, along with other additives, with polypropylene (PP) to prepare a scratch-resistant plastic composite resin composition. Injection or extrusion of this composition can produce scratch-resistant plastic products.

Additionally, the plastic composite resin composition may further include various additives such as antioxidants, colorants, release agents, lubricants, and rubber. The amounts of these additives can be appropriately adjusted and applied depending on various factors, including the desired final use and properties.

In conclusion, the bio-additive prepared by the method according to the present disclosure is a material that is cleared primarily of hemicellulose components poor in pyrolysis characteristics and obtained as the lignin and microfibrillated cellulose (MFC) components undergo a combination of reactions, including dehydration, decarboxylation, condensation, polymerization, in the presence of an acid catalyst under various controlled reaction conditions of reaction time, temperature, pressure, etc., and structurally corresponds not to a single compound, but to composite where various polymeric components are mixed, whereby the bond strength between the modified lignin and microfibrillated cellulose (MFC) is enhanced and the lignin component becomes more hydrophobic. When used in a plastic, the additive exhibits improved crystallinity, dispersibility, and compatibility with the matrix polymer, thereby imparting scratch resistance to the entire surface of the plastic material.

The present disclosure also provides a scratch-resistant plastic product comprising the plastic composition.

Below, a better understanding of the present disclosure may be obtained through the following Examples which are set forth to illustrate, but are not to be construed to limit, the present disclosure. The scope of the present disclosure is not limited to these examples, as various conditions can be modified. These examples are intended to describe the invention in greater detail to those skilled in the art.

### <Preparation of Lignin-Microfibrillated cellulose (MFC) Composite and Selective Hydrolysis Reaction of Microfibrillated cellulose (MFC) through Acid Treatment of Biomass>

### [PREPARATION EXAMPLE 1]

Domestic pine was used as the biomass used for the preparation of the lignin-microfibrillated cellulose (MFC) composite and the selective hydrolysis reaction of microfibrillated cellulose (MFC). The biomass was ground to have a diameter of less than 1 mm before the acid treatment.

The ground pine powder as biomass and water were introduced at a mass ratio of 1:10 into a Teflon-coated stainless-steel reactor. Then, sulfuric acid was added in an amount of 3 wt% relative to the total mass of the input materials, followed by stirring the mixture at 100°C for 10 minutes under closed system conditions to perform the reaction for generating the lignin-microfibrillated cellulose (MFC) composite.

The reaction temperature was then increased to 130°C under a compressed condition while the mixture was stirred for 60 minutes to obtain a solid reaction mixture. The obtained sample was washed twice with water, neutralized with 10 N potassium hydroxide solution to pH 7.0, washed again twice with water, and then dried to obtain the final solid material. The washed solid was then dried in an oven at 70°C for 6 hours.

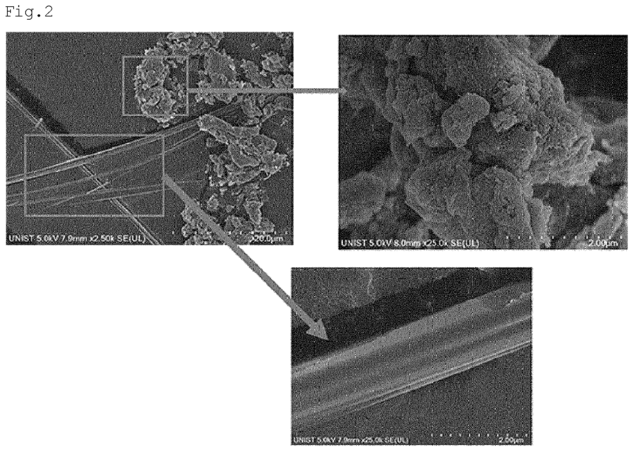

FIG. 2 shows electron microscope images of the dried sample, which includes both white fibrous parts and brown particulate parts. As shown in FIG. 2, the white fibrous material was confirmed to be microfibrillated cellulose (MFC) with a thickness of approximately 100 nm to 1 µm. The lignin-microfibrillated cellulose (MFC) composites were then ground to further shorten the length of the microfibrillated cellulose (MFC) within the composite to produce the scratch-resistant additive.

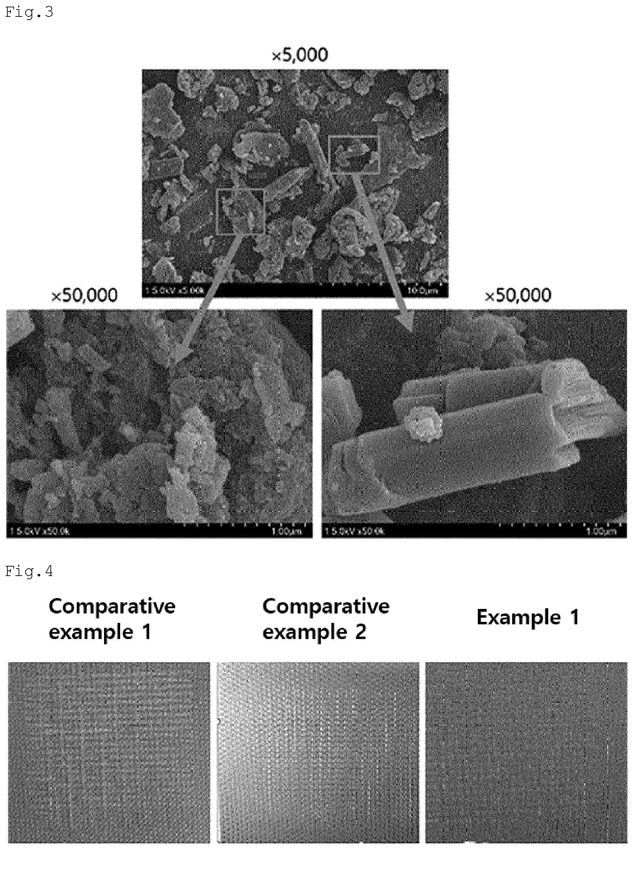

FIG. 3 shows electron microscope images of the powder containing the lignin-microfibrillated cellulose (MFC) composite after the grinding process, indicating that the mechanical grinding process broke down the long fibrous structure of the microfibrillated cellulose (MFC) to the length range of about 50 nm to 50 µm.

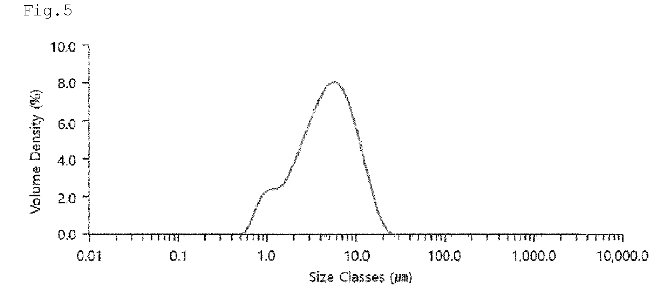

FIG. 5 presents the particle size analysis data of the ground solid powder obtained according to Preparation Example 1. FIG. 5 also indicates that the particle size distribution of the obtained solid powder ranges from 50 nm to 50 µm, indirectly demonstrating that the length of the microfibrillated cellulose (MFC) is within the range of approximately 50 nm to 50 µm.

### <Preparation of Plastic Specimens Containing Inventive Additive>

### <EXAMPLE 1>

Using the resin compositions listed in Table 1 below, analysis specimens with 5 wt% of the scratch-resistant additive obtained in Preparation Example 1 were prepared. As polymer resins used, POE and PP were commercially available from LG Chem. under the tradenames of LC170 and H1500, respectively. Talc (KC300C, KOCH) was used as a filler. PDMS (LYSI-306, Chengdu Silike Technology Co., Ltd.) accounted for the conventional scratch-resistant additive while the additive from Preparation Example 1 was used as the scratch-resistant additive according to the present disclosure.

Example 1 aims to compare the performance of the scratch-resistant bio-additive obtained in Preparation Example 1 with Comparative Example 1 (negative control) and Comparative Example 2 (positive control) using the conventional scratch-resistant additive PDMS (polydimethylsiloxane).

### <COMPARATIVE EXAMPLE 1 AND COMPARATIVE EXAMPLE 2>

In Comparative Example 1, a specimen (negative control) was produced using the resin composition listed in Table 1 without the application of PDMS. In Comparative Example 2, a specimen (positive control) was produced with the same content (5 wt%) of PDMS as the scratch-resistant material prepared in Example 1.

### <EXAMPLE 2>

As shown in Table 1, Example 2 involved increasing the amount of the additive manufactured in Preparation Example 1, resulting in analysis specimens with 10 wt% of the scratch-resistant additive from Preparation Example 1

Comparison was made between the specimens prepared in Example 2 and Comparative Examples 3 (negative control) and 4 (positive control) in terms of weight reduction and performance upon replacing the scratch-resistant additive according to the present disclosure for some of the talc usage and the conventional scratch-resistant additive PDMS, respectively.

### <COMPARATIVE EXAMPLE 3 AND COMPARATIVE EXAMPLE 4>

In Comparative Example 3, as listed in Table 1, the talc content was increased (20 wt%) compared to Comparative Example 1, matching the combined content of talc (10 wt%) and the scratch-resistant additive (10 wt%) in Example 2, but without the application of PDMS (negative control). In Comparative Example 4, a specimen (positive control) was produced by additionally including 5 wt% PDMS in Comparative Example 3.

### [EXPERIMENTAL EXAMPLE 1] Evaluation of Scratch Resistance of Scratch-Resistant Additive

Table 1 below summarizes the composition and results of scratch resistance and basic properties of the specimens prepared in Examples 1-2 and Comparative Examples 1-4. The results given in Table 1 are the average values of measurements from five specimens, and the test methods are as follows.

First, the basic properties were evaluated according to the ISO measurement methods listed in Table 1. Scratch resistance was measured using the GM's GMW14688 method for evaluating the scratch resistance of plastics with the aid of an Erichsen scratch tester. The Erichsen scratch tester measures the L value before and after scratching using a colorimeter (spin sphere) and calculates the ΔL value. A lower ΔL value indicates better scratch resistance.

**TABLE 1**

| Test item | Condition | Unit | C. Ex. 1 | C. Ex. 2 | Ex. 1 | C. Ex. 3 | C. Ex. 4 | Ex. 2 |
|---|---|---|---|---|---|---|---|---|
| Specific gravity ISO 1183 | 23°C | g/cm³ | 0.96 | 0.97 | 0.98 | 1.04 | 1.04 | 1.0 |
| Flow index ISO 1133 | 230°C/ 2.16kg | g/10min | 12 | 11 | 11 | 10 | 11 | 10 |
| Tensile strength ISO 527 | 50mm/min | Mpa | 20 | 21 | 23 | 22 | 21 | 23 |
| Elongation ISO 527 | 50mm/min | % | 55 | 50 | 41 | - | - | 22 |
| Flexural strength | 2mm/min | Mpa | 34 | 34 | 32 | 37 | 36 | 36 |
| ISO 178 | | | | | | | | |
| Scratch resistance Erichsen | GMW14688 | ΔL | 3.5 | 1.2 | 0.85 | 4.9 | 1.2 | 0.04 |
| Resin Composition | Talc | wt% | 10 | 10 | 10 | 20 | 20 | 10 |
| | POE | wt% | 10 | 10 | 10 | 10 | 10 | 10 |
| | PDMS* | wt% | 0 | 5 | 0 | 0 | 5 | 0 |
| | Additive of Preparation Ex. 1 | wt% | 0 | 0 | 5 | 0 | 0 | 10 |
| | PP | wt% | 80 | 75 | 75 | 70 | 65 | 70 |

| | | | | | | | | |
|---|---|---|---|---|---|---|---|---|
| *PDMS: Polydimethylsiloxane; commercial scratch-resistant additive | | | | | | | | |

Referring to Table 1, comparison of scratch resistance (△L value) between Comparative Examples 1 and 2 and Example 1 confirms that the specimen with the scratch-resistant additive according to Preparation Example 1 in Example 1 shows superior scratch resistance compared to Comparative Examples 1 and 2. This is illustrated in FIG. 4 (left and middle: Comparative Examples 1 and 2, right: Example 1).

Additionally, comparing the scratch resistance (△L value) of Comparative Examples 3 and 4 and Example 2, it can be confirmed that the specimen with the scratch-resistant additive according to Preparation Example 1 shows superior scratch resistance.

Furthermore, comparing the specific gravity measurements of Comparative Examples 3, 4, and Example 2, it is confirmed that there is approximately a 4% weight reduction that can be attributed to the replacement effect of the traditional filler talc (specific gravity 2.7) with the scratch-resistant additive from Experimental Example 1 (specific gravity 1.1).

With low bonding strength with the polymer matrix, conventional inorganic fillers like talc are prone to separation from the matrix upon surface deformation and damage and exposed as white particles on the surface. This increases scratch visibility due to light reflection. As shown in Table 1, the scratch-resistant additive of the present disclosure is a multifunctional additive that replaces high-density inorganic fillers while improving scratch resistance without significantly changing the basic properties of the comparison specimens.

As described hitherto, the scratch-resistant additive according to the present disclosure not only imparts improved scratch resistance to the surface of plastic products manufactured with a plastic composition containing the additive, but also contribute to the weight reduction of the products when used instead of talc, a conventional inorganic filler.

### Industrial Applicability

The present disclosure relates to a method for preparing a scratch-resistant bio-additive for plastics, and a scratch-resistant bio-additive for plastics, prepared thereby, wherein the bio-additive exhibits improved scratch resistance and can replace conventional high-density inorganic fillers. Hence, the present invention is industrially applicable.

## Claims

1. A method for preparing a scratch-resistant bio-additive for plastics, the method comprising the steps of:
(a) adding an acid to lignocellulosic biomass to hydrolyze at least a portion of hemicellulose in the lignocellulosic biomass and simultaneously to convert at least a portion of cellulose into microfibrillated cellulose (MFC), thus obtaining a lignin-microfibrillated cellulose (MFC) composite;
(b) selectively hydrolyzing at least a portion of an amorphous region of the microfibrillated cellulose (MFC) in the lignin-microfibrillated cellulose (MFC) composite obtained from step (a) to increase crystallinity of the microfibrillated cellulose (MFC);
(c) adding a base to the lignin-microfibrillated cellulose (MFC) composite with increased crystallinity obtained from step (b) to neutralize the residual acidic components, and then removing a water-soluble substance to obtain solid particles; and
(d) grinding the solid particles obtained from step (c).

2. A method for preparing a scratch-resistant bio-additive for plastics, the method comprising the steps of:
(a) adding an acid to lignocellulosic biomass to hydrolyze at least a portion of hemicellulose in the lignocellulosic biomass and simultaneously to convert at least a portion of cellulose into microfibrillated cellulose (MFC) and selectively hydrolyze at least a portion of an amorphous region of the microfibrillated cellulose (MFC) to increase crystallinity of the microfibrillated cellulose (MFC), thereby generating a lignin-microfibrillated cellulose (MFC) composite;
(b) adding a base to the lignin-microfibrillated cellulose (MFC) composite obtained from step (a) to neutralize a residual acidic component, and then removing a water-soluble substance to obtain solid particles; and
(c) grinding the solid particles obtained from step (b).

3. The method of claim 1 or 2, wherein the acid in step (a) is selected from the group consisting of an organic acid of 1 to 20 carbon atoms; an inorganic acid selected from sulfuric acid, hydrochloric acid, phosphoric acid, nitric acid, and a mixture thereof; a mixture of the organic acid and the inorganic acid; or a mixture of the organic acid and mixtures of inorganic acids.

4. The method of claim 1 or 2, wherein step (a) is performed by subjecting the lignocellulosic biomass in the presence of an acid to i) heat and/or pressure treatment, ii) steam explosion, or iii) a process combining the high-temperature and high-pressure treatment and steam explosion.

5. The method of claim 1, wherein step (b) is performed under higher temperature and/or pressure conditions than step (a).

6. The method of claim 1 or 2, wherein the acid in step (a) is any one selected from hydrochloric acid, sulfuric acid, nitric acid, and a mixture thereof and is used at a concentration of 0.5 to 70 wt%.

7. The method of claim 1 or 2, wherein the base used in step (c) of claim 1 or step (b) in claim 2 is selected from sodium hydroxide (NaOH), potassium hydroxide (KOH), calcium hydroxide (Ca(OH)₂), ammonia (NH₃), lithium hydroxide (LiOH), calcium carbonate (CaCO₃), potassium carbonate (K₂CO₃), sodium carbonate (Na₂CO₃), potassium bicarbonate (KHCO₃), magnesium hydroxide (Mg(OH)₂), calcium oxide (CaO), magnesium oxide (MgO), sodium bicarbonate (NaHCO₃), and a combination thereof.

8. The method of claim 1 or 2, wherein the solid particles obtained in step (c) of claim 1 and step (b) of claim 2 have a hemicellulose content of 5 wt% or less, based on the total weight of the lignin, cellulose, and hemicellulose components.

9. The method of claim 1 or 2, wherein the solid particles obtained in step (c) of claim 1 contain lignin-derived components in an amount of 1 wt% to 99 wt%, and cellulose-derived components in an amount of 1 wt% to 99 wt%, based on the total weight of the lignin, cellulose, and hemicellulose components.

10. The method of claim 1 or 2, wherein the microfibrillated cellulose (MFC) in the ground solid particles obtained in step (d) of claim 1 or in step (c) of claim 2 ranges in length from 50 nm to 100 µm.

11. A scratch-resistant bio-additive for plastics, prepared by the method of claim 1.

12. A scratch-resistant bio-additive for plastics, prepared by the method of claim 2.

13. A scratch-resistant bio-additive for plastics,
wherein the additive comprises a lignin-micro fibrillated cellulose (MFC) composite with the microfibrillated cellulose converted from at least a portion of cellulose by acid treatment and neutralization of lignocellulosic biomass, and
contains a lignin-derived component in an amount of 1 to 99 wt%, a cellulose-derived component in an amount of 1 to 99 wt%, and hemicellulose in an amount of 5 wt% or less, based on the total weight of the components derived from lignin, cellulose, and hemicellulose,
with the microfibrillated cellulose (MFC) in the lignin-microfibrillated cellulose (MFC) ranging in length from 50 nm to 100 µm.

14. A plastic composition, comprising the scratch-resistant bio-additive for plastics of claim 13.

15. A scratch-resistant plastic composition, comprising the scratch-resistant bio-additive for plastics of claim 13 in an amount of 0.1 to 60 wt%, based on the total weight thereof.

16. A scratch-resistant plastic product comprising the plastic composition of claim 15.
